# EUROPEAN PATENT APPLICATION

(11) **EP 2 315 116 A1**
(43) Date of publication of application: **27.04.2011**
(21) Application number: 10185604.5
(22) Date of filing: 01.10.2010
(51) Int. Cl.: G06F 9/445, G06F 11/30, G06F 21/00, H04L 29/06

(54) **Method for application execution control**

(30) Priority: 09.10.2009 JP 2009235404
(71) Applicant: Sony Corporation, Tokyo 108-0075 (JP)
(72) Inventor: Sakai, Yusuke, Minato-ku Tokyo 108-0075 (JP); Noguchi, Shinsuke, Minato-ku Tokyo 108-0075 (JP); Onogi, Ken, Minato-ku Tokyo 108-0075 (JP)
(74) Representative: Davies, Simon Robert

(57) **Abstract**

An information-processing device includes an execution unit configured to execute a plurality of application programs, an evaluation order decision unit configured to decide an evaluation order based on a degree of reliability of each of the plurality of application programs, and an execution management unit configured to manage execution, by the execution unit, of each of the application programs based on the evaluation order that is decided by the evaluation order decision unit.

## Description

The present invention relates to an information-processing device, an information-processing method, and a program. In particular, the present invention relates to an information-processing device, an information-processing method, and a program to help provide operation of a plurality of application programs.

In recent years, a service for providing a multimedia content such as a dynamic picture image and music (referred to below merely as a content) or software such as an application program for reproduction of a game or music to a content reproduction device or a device executing software has attracted attention.

Such service provides a content or software not only to a specific device such as a game instrument but also to a general-purpose client device such as a personal computer so as to expand a market size.

In a case providing a content or software to a client device, the content or the software is sometimes stored in a hard disk or a flash-memory, but in order to prevent illegal duplication, the content or the software is often stored in a read-only storage medium and provided.

However, in a case where a content or software which is delivered in a manner to be stored in a storage medium is updated, a user has to acquire a new storage medium that stores updated content or software with every update.

Therefore, as a service typified by Applicast®, a technique by which a client device downloads a content or software from a server device and uses the content or the software whenever the client device executes the content or the software has been becoming widespread. Namely, by the service, whenever a client device uses a content or software, the client device can download the latest content or software which corresponds to a specification thereof from a server device and use the content or the software at all times (refer to Japanese Unexamined Patent Application Publication No. 2007-233924).

However, in the above-described technique, contents and software which are downloaded include various kinds of contents and software such as a content and software which are provided from an organization that plans and manages Applicast® and affiliated providers of the organization and a content and software which are independently developed by a general user. Accordingly, contents and software which are downloaded include more reliable content and software of which operation stability is sufficiently verified and less reliable content and software of which operation stability is not sufficiently verified.

As a result, although a content or software is downloaded from a server and executed, the content or software actually includes an abnormal cord which may cause frequent occurrence of errors and an unstable operation is sometimes executed disadvantageously. Further, when a plurality of contents and software are downloaded and simultaneously executed by parallel processing, operation states of all of the contents and software sometimes become unstable as a result of an occurrence of an unstable operation of a single content or software.

It is desirable to provide an information-processing device, an information-processing method, and a program that suppress an execution of less reliable software in a case where a client device downloads a content or software from a server device and uses the content or the software with every execution, and thus improve operation stability.

Various respective aspects and features of the invention are defined in the appended claims. Combinations of features from the dependent claims may be combined with features of the independent claims as appropriate and not merely as explicitly set out in the claims.

An information-processing device according to an embodiment of the present invention includes an execution means for executing a plurality of application programs, an evaluation order decision means for deciding an evaluation order based on a degree of reliability of each of the plurality of application programs, and an execution management means for managing execution, by the execution means, of each of the application programs based on the evaluation order that is decided by the evaluation order decision means.

The information-processing device of the embodiment may further include a reliability evaluation acquisition means for acquiring reliability evaluation data of each of the application programs from a reliability evaluation data management server through a network, and a security score management means for managing the reliability evaluation data of each of the application programs as a security score representing a security level. In the information-processing device, the evaluation order decision means may decide an evaluation order based on the security score of each of the plurality of application programs as the degree of reliability.

The information-processing device of the embodiment may further include an operation monitoring means for monitoring an operation state of each of the application programs when the application programs are executed by the execution means, and a stability score management means for managing an operation monitoring result, which is obtained by the operation monitoring means, of each of the application programs as a stability score representing stability. In the information-processing device, the evaluation order decision means may decide an evaluation order based on the stability score of each of the plurality of application programs as the degree of reliability.

The information-processing device of the embodiment may further include an operational means that is operated by a user when the execution means is instructed to execute the application programs, a usage monitoring means for monitoring a usage frequency of each of the application programs when execution of the application programs is instructed by the operational means, and a usage frequency score management means for managing a usage monitoring result, which is obtained by the usage monitoring means, of each of the application programs as a usage frequency score representing a usage frequency. In the information-processing device, the evaluation order decision means may decide an evaluation order based on the usage frequency score of each of the plurality of application programs as the degree of reliability.

In the information-processing device of the embodiment, the evaluation order decision means may decide an evaluation order based on one or all of the security score, the stability score, and the usage frequency score of each of the plurality of application programs, and a combination of any of the security score, the stability score, and the usage frequency score, as the degree of reliability.

In the information-processing device of the embodiment, the execution management means may include a start determination means for determining whether to permit a start of an application program that is currently unexecuted based on the evaluation order, and manage a start of each of the application programs based on a determination result of the start determination means.

In the information-processing device of the embodiment, the execution management means may include a shutdown determination means for determining whether to shut down the application program that is in execution based on the evaluation order, and manage shutdown of each of the application programs based on a determination result of the shutdown determination means.

The information-processing device of the embodiment may further include an access frequency decision means for deciding an access frequency of each of the application programs based on the evaluation order, and an access frequency management means for managing the access frequency based on the access frequency of each of the application programs. In the information-processing device, the execution management means may manage execution of each of the application programs at an access frequency that is managed by the access frequency management means.

An information-processing method of an embodiment of the present invention includes the steps of executing a plurality of application programs, deciding an evaluation order based on a degree of reliability of each of the plurality of application programs, and managing execution of each of the application programs in processing in the step of executing the plurality of application programs, based on the evaluation order decided by processing of the step of deciding an evaluation order.

A program according to an embodiment of the present invention enables a computer to execute processing that includes the steps of executing a plurality of application programs, deciding an evaluation order based on a degree of reliability of each of the plurality of application programs, and managing execution of each of the application programs in processing in the step of executing the plurality of application programs, based on the evaluation order decided by processing of the step of deciding an evaluation order.

According to the embodiment of the present invention, a plurality of application programs are executed, an evaluation order based on a degree of reliability of each of the plurality of application programs is decided, and execution of each of the application programs is managed based on the decided evaluation order.

The information-processing device of the embodiment of the present invention may be an independent device or a block executing information processing.

According to the embodiment of the present invention, operation stability in execution of a plurality of contents or application programs can be improved.

Embodiments of the invention will now be described with reference to the accompanying drawings, throughout which like parts are referred to by like references, and in which:
Fig. 1 illustrates a configuration example of a function realized by an information-processing device;
Fig. 2 is a flowchart for explaining security score management processing;
Fig. 3 is a flowchart for explaining stability score management processing;

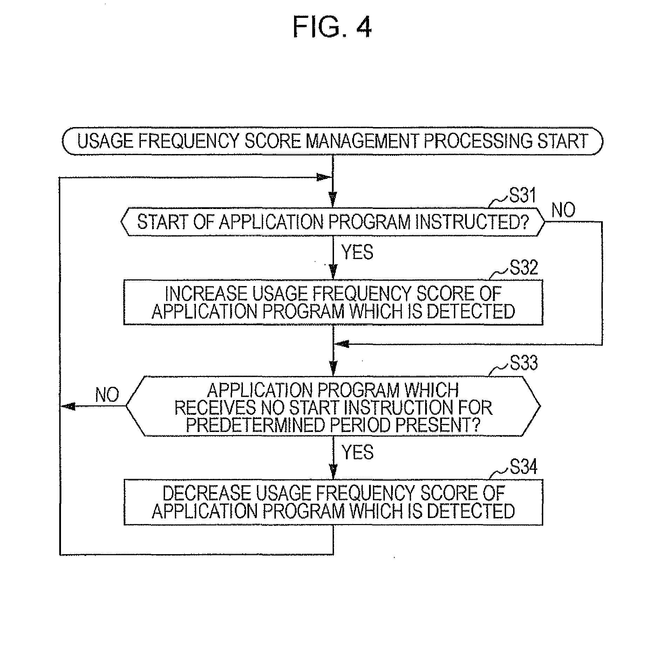

Fig. 4 is a flowchart for explaining usage frequency score management processing;
Fig. 5 is a flowchart for explaining priority rank decision processing;
Fig. 6 illustrates an access frequency which is set based on a priority rank;
Fig. 7 is a flowchart for explaining application program execution management processing; and
Fig. 8 illustrates a configuration example of a general-purpose personal computer.

### [Configuration Example of Information-Processing Device]

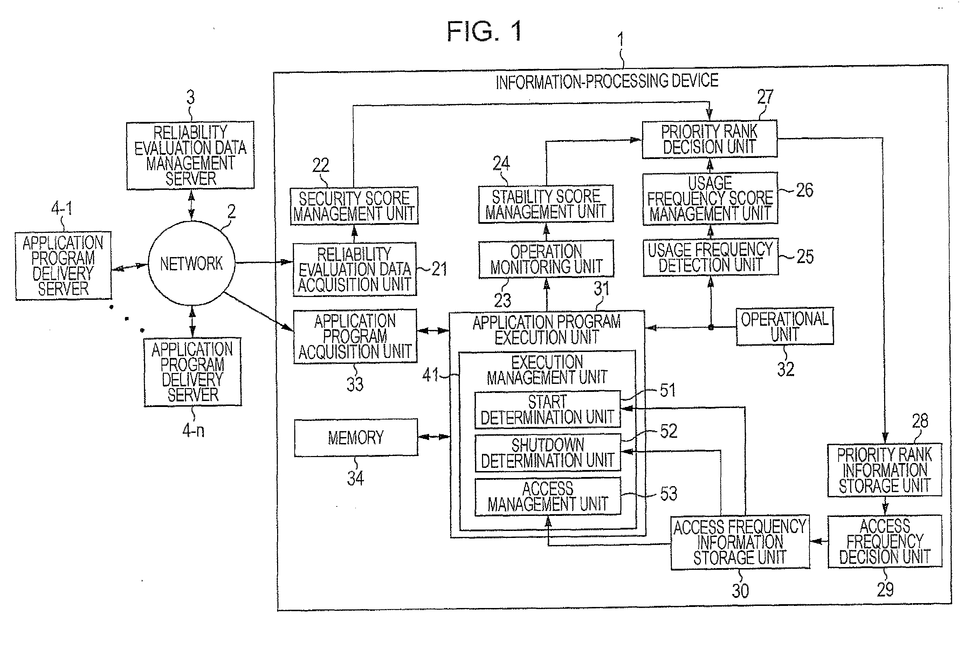

Fig. 1 illustrates a configuration example of a function which is realized by an information-processing device in accordance with one embodiment of the invention.

An information-processing device 1 shown in Fig. 1 is, for example, a general-purpose personal computer, a television receiver having a function for executing a dedicated application program, or the like. The information-processing device 1 is connected to a network 2. In execution of an application program, the information-processing device 1 downloads the latest application program from application program delivery servers 4-1 to 4-n through the network 2 at all times to execute the application program. Therefore, the information-processing device 1 basically does not store an application program. The information-processing device 1 downloads a list of executable application programs and downloads an application program of which execution is instructed by a user from the list so as to execute the application program.

Further, the information-processing device 1 acquires reliability evaluation data of an application program which is to be executed from a reliability evaluation data management server 3 through the network 2 and thus controls execution of an application program. The reliability evaluation data management server 3 delivers reliability evaluation data of a software program which is distributed on the network 2. More specifically, the reliability evaluation data management server 3 obtains a ranking of evaluation data about operation stability, for example, from a questionnaire survey of a plurality of distributed software programs with respect to users or the like, and manages the ranking as reliability evaluation data. The reliability evaluation data management server 3 stores preliminarily-produced reliability evaluation data, and delivers the data to the information-processing device 1 in response to a request from the information-processing device 1. Here, the reliability evaluation data is not limited to the above-described data obtained based on the questionnaire survey but may be any data as long as stability evaluation of a software program can be objectively obtained in a quantified manner. As other reliability evaluation data, a ranking that is described so-called "word of mouth" and obtained by scoring evaluation information which is inputted by an access of a user with a personal computer on the network 2 may be used, for example.

The application program delivery servers 4-1 to 4-n respectively store various application programs which are updated to the latest version, and deliver a corresponding application program when receiving a delivery request from the information-processing device 1. Here, the application program delivery servers 4-1 to 4-n are called merely the application program delivery server 4 in a case where the application program delivery servers 4-1 to 4-n are not have to be discriminated, and other configurations are called in a similar manner.

Next, functions realized by the information-processing device 1 are described.

The information-processing device 1 includes a reliability evaluation data acquisition unit 21, a security score management unit 22, an operation monitoring unit 23, a stability score management unit 24, a usage frequency detection unit 25, a usage frequency score management unit 26, a priority rank decision unit 27, and a priority rank information storage unit 28. The information-processing device 1 further includes an access frequency decision unit 29, an access frequency information storage unit 30, an application program execution unit 31, an operational unit 32, an application program acquisition unit 33, and a memory 34.

The reliability evaluation data acquisition unit 21 has a communication function composed of an Ethernet board. The reliability evaluation data acquisition unit 21 accesses the reliability evaluation data management server 3 through the network 2 and downloads reliability data so as to supply the reliability data to the security score management unit 22. The security score management unit 22 scores reliability evaluation data of each software program so as to manage a security score in a manner to associate the security score with each security program and supply the security score to the priority rank decision unit 27. More specifically, in a case where information delivered as the reliability evaluation data is an evaluation ranking of every piece of software, for example, the security score management unit 22 sets a score in accordance with an order of the ranking.

The operation monitoring unit 23 supplies operation state monitoring information to the stability score management unit 24 based on operation states of various application programs which are executed by the application program execution unit 31. The operation state monitoring information is, for example, time from timing of an occurrence of one execution command to completion of a response (response time) or the like, that is, information representing operation stability in execution of an application program. The stability score management unit 24 obtains a stability score in a manner to associate the stability score with each application program based on the operation state monitoring information and manages the score. More specifically, the stability score management unit 24 sets and manages a stability score such that, for example, as the response time is shorter, the score is higher in operation state monitoring information, and supplies the stability score to the priority rank decision unit 27.

The usage frequency detection unit 25 obtains information of a usage frequency of every application program based on an operational signal, by which a user instructs execution of an application program, so as to supply the information to the usage frequency score management unit 26. The usage frequency score management unit 26 obtains and manages a usage frequency score based on the usage frequency information so as to supply the usage frequency score to the priority rank decision unit 27. In more detail, the usage frequency score management unit 26 obtains a usage frequency score such that as a usage frequency is higher, the score is higher, based on the usage frequency information, so as to manage the usage frequency score in a manner to associate the usage frequency score with each application program and supply the usage frequency score to the priority rank decision unit 27.

The priority rank decision unit 27 acquires a security score supplied from the security score management unit 22, a stability score supplied from the stability score management unit 24, and a usage frequency score supplied from the usage frequency score management unit 26. Further, the priority rank decision unit 27 decides a priority rank of an application program based on the security score, the stability score, and the usage frequency score that are managed in a manner to correspond to every application program, and allows the priority rank information storage unit 28 to store the priority rank. In more detail, the priority rank decision unit 27 obtains an order of a linear sum of a security score, a stability score, and a usage frequency score or a weighted linear sum of every application program so as to obtain a priority rank of every application program.

The access frequency decision unit 29 decides an access frequency of each application program based on the priority rank stored in the priority rank information storage unit 28 so as to allow the access frequency information storage unit 30 to store the access frequency.

When execution of an application program is instructed by the operational unit 32, the application program execution unit 31 requests the application program delivery server 4 to deliver an application program based on an operational signal which is produced by the operational unit 32 in a manner to correspond to the instruction so as to download and acquire the application program. Further, the application program execution unit 31 develops the downloaded application program in the memory 34 so as to install and execute the application program. Further, the application program execution unit 31 manages an operation of an application program which is in execution based on priority rank information stored in the priority rank information storage unit 28 and access frequency information stored in the access frequency information storage unit 30. In more detail, the application program execution unit 31 includes an execution management unit 41 and manages a start, shutdown, and an access frequency of an application program with the execution management unit 41.

The execution management unit 41 includes a start determination unit 51, a shutdown determination unit 52, and an access management unit 53. The start determination unit 51 determines whether to permit a start based on the access frequency information, which is stored in the access frequency information storage unit 30, of an application program which is instructed to be executed by the operational signal of the operational unit 32. In more detail, the start determination unit 51 determines whether to permit a start based on the access frequency information. The execution management unit 41 starts the application program which is instructed to be executed, based on the determination result of the start determination unit 51.

The shutdown determination unit 52 reads out the access frequency information, which is stored in the access frequency information storage unit 30, of an application program which is in execution and determines whether the application program is set in immediate shutdown or not. The execution management unit 41 shuts down the application program in execution based on the determination result of the shutdown determination unit 52.

The access management unit 53 reads out the access frequency information, which is stored in the access frequency information storage unit 30, of every application program which is in execution, and manages an access frequency so as to allow the application program execution unit 31 to access the memory 34 at a predetermined access frequency.

### [Security Score Management Processing]

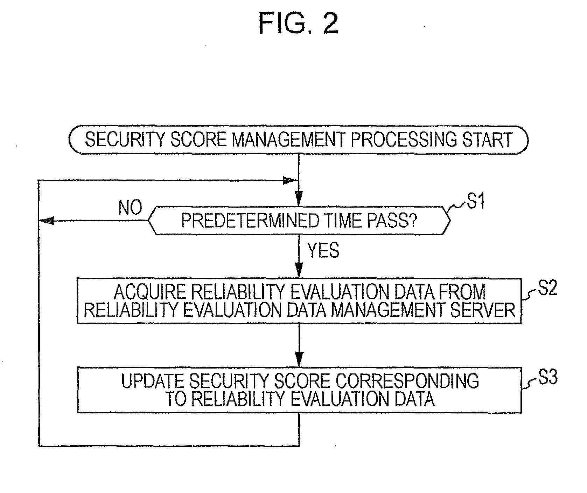

Security score management processing is described below with reference to a flowchart of Fig. 2.

In step S1, the reliability evaluation data acquisition unit 21 determines whether predetermined time passes or not, and repeats similar processing until the predetermined time passes. Then, when it is determined that the predetermined time passes in step S1, the processing goes to step S2.

In step S2, the reliability evaluation data acquisition unit 21 requests the reliability evaluation data management server 3 to supply reliability evaluation data of an application program through the network 2 and acquires the reliability evaluation data which is supplied in response to the request. Then, the reliability evaluation data acquisition unit 21 supplies the acquired reliability evaluation data to the security score management unit 22. The reliability evaluation data management server 3 manages ranking information of application programs which is based on reliability evaluation obtained from a user's questionnaire of application programs, for example. Hereinafter, the description is offered in an assumption that the reliability evaluation data is ranking information of every application program, but needless to say, the reliability evaluation data may be other information.

In step S3, the security score management unit 22 updates a security score while associating the security score with the application program based on the reliability evaluation data which is supplied. Then, the processing goes back to step S1.

When the reliability evaluation data is ranking information of reliability evaluation as this example, the security score management unit 22 sequentially updates a security score as the following description, for example. That is, the security score management unit 22 updates a score such that security scores of application programs ranked from first to third are set to be 100 points, those ranked from fourth to tenth are set to be 80 points, and those ranked from eleventh to thirtieth are set to be 50 points. Namely, the security score management unit 22 continuously updates the processing in which security scores of application programs having higher evaluation are set higher and security scores of application programs having lower evaluation are set lower, at predetermined time intervals.

### [Stability Score Management Processing]

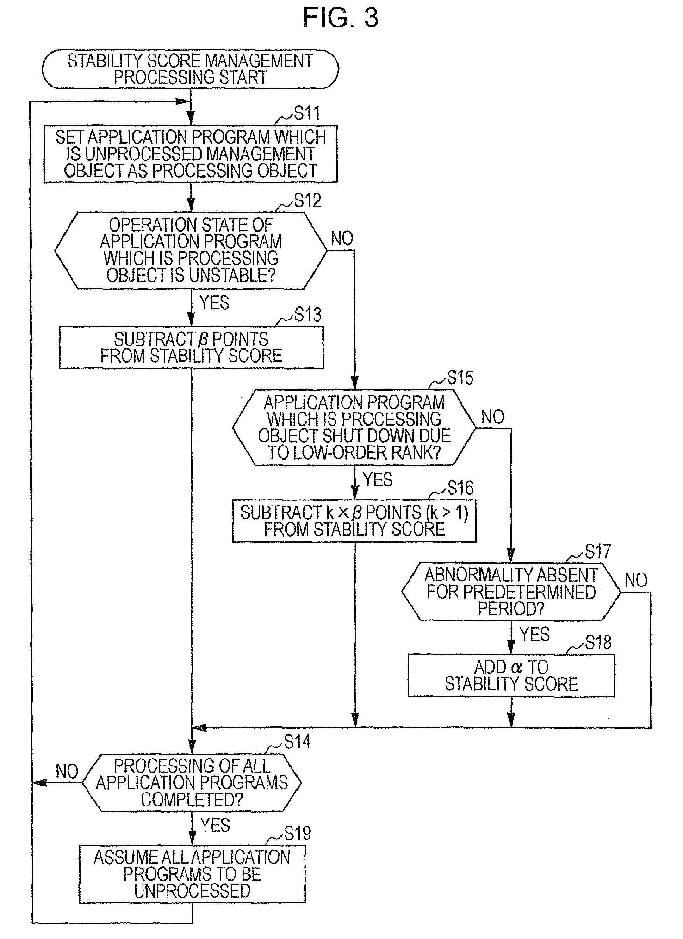

Next, stability score management processing is described with reference to a flowchart of Fig. 3.

In step S11, the operation monitoring unit 23 sets an unprocessed application program as a processing object (monitoring object) among a plurality of application programs which are executed by the application program execution unit 31.

In step S12, the operation monitoring unit 23 determines whether an operation state of the application program which is set as the processing object is unstable or not. In more detail, the operation monitoring unit 23 measures necessary time for predetermined arithmetic, when the application program which is the processing object executes processing, so as to determine whether the measured necessary time is longer than predetermined time and an operation is obviously delayed compared to a normal operation. That is, when operation delay occurs as this, it can be considered that the application program which is the processing object has a certain error, therefore execution itself is likely difficult, and an operation becomes unstable as a result. When it is determined that the operation is in an unstable state, for example, in step S12, the processing goes to step S13.

In step S13, the operation monitoring unit 23 notifies the stability score management unit 24 of an occurrence of the unstable operation state. The stability score management unit 24 subtracts β points from a stability score of the application program which is the processing object in response to the notification of the occurrence of the unstable operation state. Namely, a reference point is set for each application program as a stability score in an initial step, and whenever an unstable state occurs, β points are subtracted from the score.

In step S14, the operation monitoring unit 23 determines whether processing of all of the application programs are completed or not. When there is an unprocessed application program, the processing goes back to step S11, and the processing from step S11 to S18 is repeated until the processing of all of the application programs is executed.

Then, when there is no unprocessed application program in step S14, the operation monitoring unit 23 repeats monitoring of an operation state of all of the application programs again as it is assumed that all of the application programs are unprocessed in step S19.

On the other hand, when the operation state of the application program which is the processing object is not unstable in step S12, the processing goes to step S15. In step S15, the operation monitoring unit 23 determines whether the application program which is the processing object is shut down due to lowering of the priority rank.

In step S15, when the priority rank is lowered and the application program is forcibly shut down by application program execution management processing which is described later, for example, the processing goes to step S16.

In step S16, the operation monitoring unit 23 notifies the stability score management unit 24 that the application program which is the processing object is forcibly shut down due to the lowering of the priority rank. Accordingly, the stability score management unit 24 subtracts k×β (k>1) points from the stability score of the application program which is the processing object. That is, whenever the application program which is the processing object is forcibly shut down, larger subtraction is performed than the case of the unstable state.

Further, in step S15, when it is determined that there is no forced shutdown accompanied by lowering of the priority rank, the processing goes to step S17.

In step S17, the operation monitoring unit 23 determines whether the application program which is the processing object is continuously in a state with no abnormal operation such as an unstable operation or forced shutdown for a predetermined period of time or longer. When it is determined that a state with no abnormal operation is continued for the predetermined period of time or longer in step S17, for example, the processing goes to step S18.

In step S18, the operation monitoring unit 23 notifies the stability score management unit 24 that no abnormal operation occurs in the application program which is the processing object for the predetermined period of time or longer. The stability score management unit 24 adds α points to the stability score of the application program which is the processing object in response to the notification. That is, since no abnormal operation occurs for the predetermined period of time or longer, the stability score representing stability is improved.

On the other hand, when it is determined an abnormal operation occurs within the predetermined period of time in step S17, the processing goes to step S14.

In summarizing the above processing, points are subtracted from the stability score of the application program which is the processing object when an unstable operation is detected, and k×β (k>1) points which is larger than β points are subtracted from the stability score when the application program is shut down. Further, when no abnormal operation is detected for the predetermined period of time or longer, α points are added to the stability score. Thus, the stability score is decreased whenever an abnormal operation occurs, and the stability score is increased as the period in which no abnormal operation occurs continues longer.

### [Usage Frequency Score Management Processing]

In step S31, the operational unit 32 is operated and the usage frequency detection unit 25 determines whether the application program execution unit 31 is instructed to start any of application programs based on an operational signal of the operational unit 32. When the start of the application program is instructed in step S31, for example, the usage frequency detection unit 25 notifies the usage frequency score management unit 26 of presence of the start instruction together with information for specifying an application program which is instructed to start in step S32. The usage frequency score management unit 26 adds a predetermined point to a usage frequency score of the application program which is notified based on the notification.

On the other hand, when the start of the application program is not instructed in step S31, the processing of step S32 is skipped.

In step S33, the usage frequency score management unit 26 determines whether there is an application program which receives no start instruction for a predetermined period of time among application programs of which usage frequency scores are managed by the usage frequency score management unit 26. When there is an application program which receives no start instruction for a predetermined period of time in step S33, the usage frequency score management unit 26 subtracts a predetermined point from a usage frequency score of the application program which receives no start instruction for the predetermined period of time in step S34.

When there is no application program which receives no start instruction for the predetermined period of time in step S33, the processing of step S34 is skipped and the processing goes back to step S31.

By the above processing, an application program that receives a start instruction more frequently has a higher usage frequency score, and an application program that receives a start instruction less frequently has a lower usage frequency score.

### [Priority Rank Decision Processing]

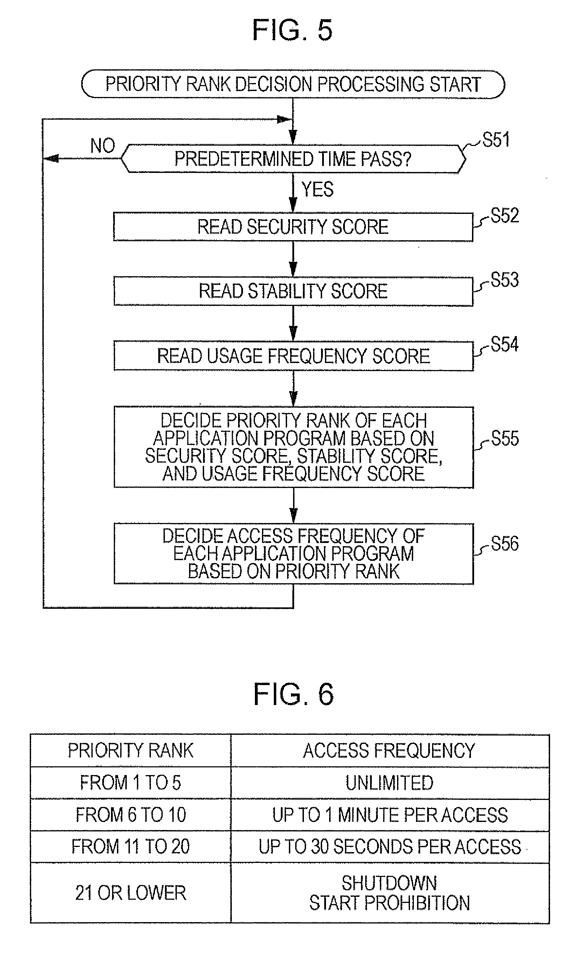

Next, priority rank decision processing is described with reference to a flowchart of Fig. 5.

In step S51, the priority rank decision unit 27 determines whether predetermined time passes and repeats similar processing until the predetermined time passes. Then, when it is determined that the predetermined time passes in step S51, the processing goes to step S52.

In step 52, the priority rank decision unit 27 requests the security score management unit 22 to supply a security score. In response to the request, the security score management unit 22 supplies information of a security score which is managed in a manner to be associated with each current application program, to the priority rank decision unit 27. Accordingly, the priority rank decision unit 27 acquires the information of the security score which is managed in a manner to be associated with each application program.

In step S53, the priority rank decision unit 27 requests the stability score management unit 24 to supply a stability score. In response to the request, the stability score management unit 24 supplies information of a stability score which is managed in a manner to be associated with each current application program, to the priority rank decision unit 27. Accordingly, the priority rank decision unit 27 acquires the information of the stability score which is managed in a manner to be associated with each application program.

In step S54, the priority rank decision unit 27 requests the usage frequency score management unit 26 to supply a usage frequency score. In response to the request, the usage frequency score management unit 26 supplies information of a usage frequency score which is managed in a manner to be associated with each current application program, to the priority rank decision unit 27. Accordingly, the priority rank decision unit 27 acquires the information of the usage frequency score which is managed in a manner to be associated with each application program.

In step S55, the priority rank decision unit 27 rearranges application programs in a descending order based on the security score, the stability score, and the usage frequency score that are acquired, so as to decide priority ranks of the application programs. Further, the priority rank decision unit 27 allows the priority rank information storage unit 28 to store information of the decided priority ranks.

By the above processing, the priority ranks of the application programs are decided based on evaluation of other users (security score), stability in a real operation in the information-processing device 1 (stability score), and a usage frequency of a user of the information-processing device 1 (usage frequency score). Accordingly, the priority rank of an application program of which the evaluation of other users is higher, the operation stability is higher, and the usage frequency of the user is higher is decided at a higher order.

In step S56, the access frequency decision unit 29 reads out the priority rank information from the priority rank information storage unit 28, decides an access frequency to the memory 34 for every application program while associating the access frequency with the priority rank, and allows the access frequency information storage unit 30 to store the access frequency. In more detail, the access frequency information storage unit 30 sets an access frequency in a manner to associate the access frequency with a priority rank as shown in Fig. 6, for example. That is, in a case of Fig. 6, the access frequency information storage unit 30 does not limit an access frequency to application programs at priority ranks from first place to fifth place, and sets such that the application programs can be unlimitedly accessed in one processing. Further, the access frequency information storage unit 30 sets such that application programs at priority ranks from sixth place to tenth place can be accessed at an access frequency up to one minute per access. Further, the access frequency information storage unit 30 sets such that application programs at priority ranks from eleventh place to twentieth place can be accessed at an access frequency up to 30 seconds per access. Furthermore, the access frequency information storage unit 30 sets such that a start of application programs at priority ranks of twenty-first place and lower is prohibited when they are before a start, and the application programs are immediately shut down when they are in execution.

Thus, in a case of an application program of which the evaluation of other users is higher, the stability of an operation in the information-processing device 1 is higher, and the usage frequency is higher, the limit of an access frequency to the memory 34 is set to be longer. Further, in a case of an application program of which the evaluation of other users is lower, the stability of an operation in the information-processing device 1 is lower, and the usage frequency is lower, access time, during which continuous access is permitted in one access, is limited. Further, in a case of an application program of which the priority rank is decided at a predetermined order or lower due to the evaluation of other users, the stability of an operation in the information-processing device 1, and the usage frequency, it is set that a start of the application program is prohibited or the application program in execution is shut down.

Further, the priority rank information and the access frequency information are continuously updated at a predetermined time interval by the above processing. That is, the priority rank information and the access frequency information continue to be updated dynamically. Namely, the priority rank information and the access frequency information change in a manner to correspond to changes of the evaluation of other users, the stability, and the access frequency. Consequently, when the evaluation of other users, the stability, or the access frequency is improved, the priority rank information and the access frequency information also change to be in setting of a higher order. In an opposite manner, when the evaluation of other users, the stability, or the access frequency is degraded, the priority rank information and the access frequency information also change to be in setting of a lower order.

### [Application Program Execution Management Processing]

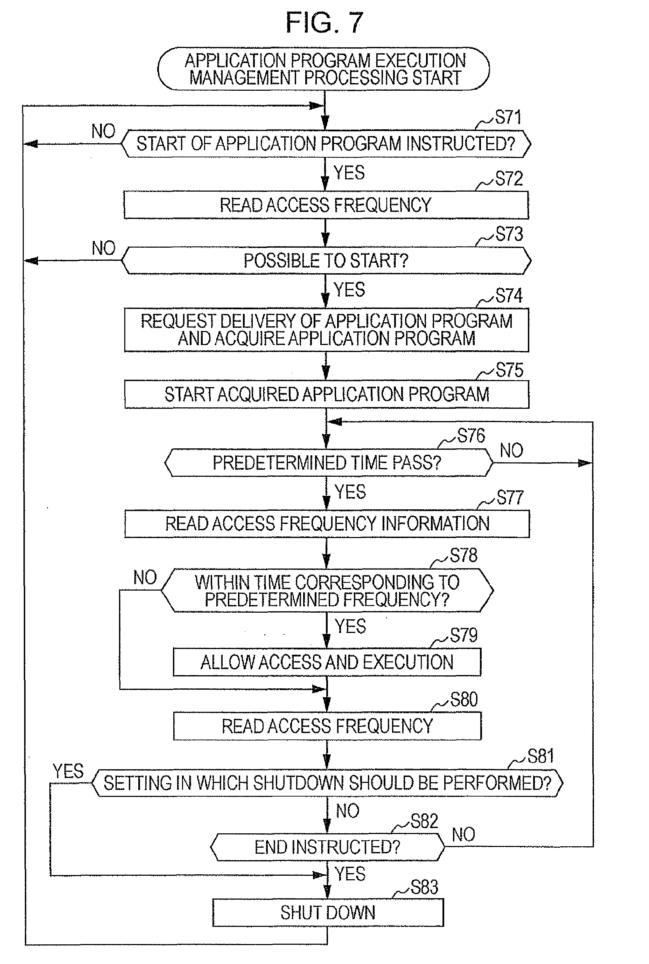

Next, application program execution management processing is described with reference to a flowchart of Fig. 7.

In step S71, the application program execution unit 31 determines whether execution of an application program is instructed or not based on an operational signal from the operational unit 32. When an execution is instructed, the processing goes to step S72.

In step S72, the execution management unit 41 controls the start determination unit 51 to read out the access frequency information stored in the access frequency information storage unit 30.

In step S73, the execution management unit 41 controls the start determination unit 51 to determine whether the application program which is instructed to start can be started, based on the priority rank information. That is, the execution management unit 41 determines whether the priority rank of the application program which is instructed to start is low and an access frequency is set to be in start prohibition. When the application program which is instructed to start is set in the start prohibition in step S73, the application program is not started. Then, the processing goes back to step S71.

On the other hand, when the application program which is instructed to start is not in the start prohibition in step S73, the processing goes to step S74.

In step S74, the application program execution unit 31 controls the application program acquisition unit 33 to request the application program delivery server 4 to deliver the application program which is instructed to start, and acquire the application program.

In step S75, in response to the request, the application program delivery server 4 delivers the application program to the information-processing device 1. The application program acquisition unit 33 acquires the application program, which is delivered, and supplies the application program to the application program execution unit 31. The application program execution unit 31 develops the application program, which is supplied, into the memory 34 to install the application program, and starts the application program to execute it.

In step S76, the execution management unit 41 determines whether predetermined time passes, and repeats similar processing until the predetermined time passes. When the predetermined time passes in step S76, the execution management unit 41 controls the access management unit 53 to read out the access frequency information stored in the access frequency information storage unit 30.

In step S77, the execution management unit 41 controls the access management unit 53 to read out an access frequency of the application program which is in execution, based on the access frequency information which is read out.

In step S78, the execution management unit 41 controls the access management unit 53 to determine whether the access frequency is within time corresponding to a predetermined frequency. In step S78, in a case where the application program which is in execution is at the priority rank from first place to fifth place, for example, there is no limitation on the access frequency. Therefore, it is determined that the access frequency is constantly within the time of the predetermined frequency. In a case where the application program is at the priority rank from sixth place to tenth place, an access to the memory 34 is permitted up to one minute in one access. Therefore, in a case within one minute, it is determined that the access frequency is within the time corresponding to the predetermined frequency. In a case where the application program is at the priority rank from eleventh place to twentieth place, one access to the memory 34 is up to 30 seconds. Therefore, in a case within 30 seconds, it is determined that the access frequency is within the time corresponding to the predetermined frequency.

When the access frequency is within the time which is set based on the access frequency information in step S78, for example, the execution management unit 41 allows the application program execution unit 31 to access the memory 34 in step S79. On the other hand, when the access frequency is not within the time which is set based on the access frequency information in step S78, for example, the processing of step S79 is skipped.

In step S80, the execution management unit 41 controls the shutdown determination unit 52 to read out the access frequency information stored in the access frequency information storage unit 30.

In step S81, the execution management unit 41 controls the shutdown determination unit 52 to determine whether the application program in execution should be shut down or not based on the access frequency information which is read out. When the priority rank of the application program in execution is within the top 20 in Fig. 6 in step S81, for example, it is not set that the application program is immediately shut down in the access frequency information. Accordingly, the processing goes to step S82.

In step S82, the application program execution unit 31 determines whether shutdown of the application program is instructed or not based on an operational signal from the operational unit 32. When the shutdown is instructed based on the operational signal in step S82, for example, the execution management unit 41 shuts down the application program in step S83. Then, the processing goes back to step S71. Here, at the shutdown, the application program execution unit 31 eliminates the application program after uninstalling the application program which has been developed in the memory 34.

On the other hand, when the priority rank of the application program which is in execution is at twenty-first place or lower in Fig. 6 in step S82, for example, it is set that the application program is forcibly shut down at once in the access frequency information. As a result, the processing of step S82 is skipped and the processing goes to step S83.

Further, when the shutdown of the application program is not instructed in step S82, the processing goes back to step S76. That is, when the application program is in execution, the application program execution unit 31 accesses the memory 34 at the access frequency within the time set based on the access frequency information and executes the application program. Namely, the application program is executed at the access frequency corresponding to the access frequency information which changes depending on the operation state.

Therefore, even in a case of an application program which is in execution, for example, if an unstable operation is repeated, the stability score is gradually lowered and the priority rank is lowered, resulting in forced shutdown or prohibition of the next and later start-up of the application program.

Further, even in a case of an application program of which the priority rank is low due to its repeated unstable operation, if the operation stability is improved by update of the program, for example, by the next start-up, improvement of the security score which is evaluation of other users and improvement of the stability score can be expected. As a result, even in a case of an unstable application program, if the operation stability is secured by update of the program, the priority rank rises and therefore the access frequency gradually rises.

Further, even in a case of an application program in which start prohibition and shutdown are once set due to a lowered priority rank thereof, it is expected that the priority rank rises as a result of improvement of the evaluation of other users due to update. As a result, even in a case of such application program, when the program is updated, the priority rank rises and therefore the access frequency gradually rises, enabling execution of the program.

According to the embodiment of the present invention, a priority rank of an application program is set depending on evaluation of other users, operation stability, and a usage frequency of a user. Therefore, the access frequency to the application program in a memory can be limited depending on the priority rank, and in a case of an application program ranked at a lower order than a predetermined order, start of the program can be prohibited and the program can be shut down even when it is in execution.

Accordingly, an application program of which the evaluation of other users is low, an operation is unstable, or the usage frequency is low is not considered to operate stably, so it is possible to limit the frequency of the operation of the program or prevent the operation.

As a result, operation stability of the whole of the information-processing device 1 can be improved.

Here, the priority rank is decided by using the security score, the stability score, and the usage frequency score in the above description, but parameters other than these may be used or one of these parameters or a combination of any of these parameters may be used.

Further, an application program is downloaded through the network and installed to be started every time start-up is instructed, and the application program is uninstalled at a time of shutdown in the above-described example. However, a so-called resident application program is applicable. That is, even in a case of an already-installed application program, operation stability of the information-processing device can be improved by processing the program in a similar manner.

By the way, the series of processing described above can be executed by hardware, but may be executed by software. In a case where the series of the processing is executed by software, an application program is installed to a computer in which a program constituting the software is installed in dedicated hardware or a general-purpose personal computer which is capable of executing various functions by installing various programs, for example, from a storage medium.

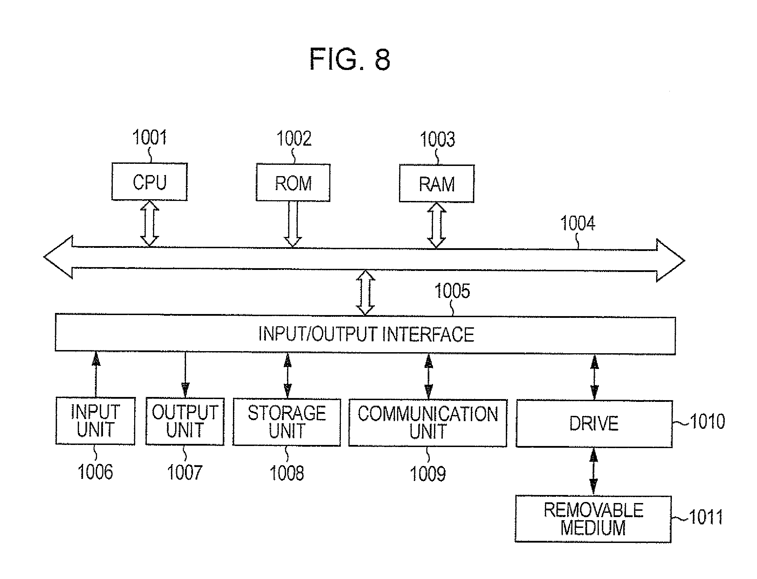

Fig. 8 illustrates a configuration example of a general-purpose personal computer. This personal computer has a central processing unit (CPU) 1001 built-in. To the CPU 1001, an input/output interface 1005 is connected through a bus 1004. To the bus 1004, a read only memory (ROM) 1002 and a random access memory (RAM) 1003 are connected.

To the input/output interface 1005, an input unit 1006, an output unit 1007, a storage unit 1008, and a communication unit 1009 are connected. The input unit 1006 is composed of an input device such as a key board and a mouse with which a user inputs an operational command. The output unit 1007 outputs a processing operational screen and an image of a processing result to a display device. The storage unit 1008 is composed of a hard disk drive which stores a program and various kinds of data and the like. The communication unit 1009 is composed of a local area network (LAN) adapter and the like, and executes communication processing through the network as typified by internet. Further, a drive 1010 is connected to the input/output interface 1005. The drive 1010 reads and writes data from and to a removable medium 1011 which is a magnetic disc (including a flexible disc), an optical disc (including compact disc-read only memory (CD-ROM) and a digital versatile disc (DVD)), a magnetic-optical disc (including a mini disc (MD)), or a semiconductor memory.

The CPU 1001 executes various kinds of processing in accordance with a program stored in the ROM 1002 or a program which is read from the removable medium 1011, which is a magnetic disc, an optical disc, a magnetic-optical disc, or a semiconductor memory, for example, installed in the storage unit 1008, and loaded on the RAM 1003 from the storage unit 1008. The RAM 1003 arbitrarily stores data which is necessary when the CPU 1001 executes various kinds of processing.

It should be noted that steps of describing a program stored in a storage medium includes processing which is executed in a time-series manner corresponding to the described order of the specification, and also includes processing which is executed in a parallel manner or an individual manner and is not necessarily executed in a time-series manner.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

It should be understood by those skilled in the art that various modifications, combinations, sub-combinations and alterations may occur depending on design requirements and other factors insofar as they are within the scope of the appended claims or the equivalents thereof.

## Claims

1. An information-processing device, comprising:
an execution means for executing a plurality of application programs;
an evaluation order decision means for deciding an evaluation order based on a degree of reliability of each of the plurality of application programs; and
an execution management means for managing execution, by the execution means, of each of the application programs based on the evaluation order that is decided by the evaluation order decision means.

2. The information-processing device according to Claim 1, further comprising:
a reliability evaluation acquisition means for acquiring reliability evaluation data of each of the application programs from a reliability evaluation data management server through a network; and
a security score management means for managing the reliability evaluation data of each of the application programs as a security score representing a security level; wherein
the evaluation order decision means decides an evaluation order based on the security score of each of the plurality of application programs as the degree of reliability.

3. The information-processing device according to Claim 1, further comprising:
an operation monitoring means for monitoring an operation state of each of the application programs when the application programs are executed by the execution means; and
a stability score management means for managing an operation monitoring result of each of the application programs, the operation monitoring result being obtained by the operation monitoring means, as a stability score representing stability; wherein
the evaluation order decision means decides an evaluation order based on the stability score of each of the plurality of application programs as the degree of reliability.

4. The information-processing device according to Claim 1, further comprising:
an operational means that is operated by a user when the execution means is instructed to execute the application programs;
a usage monitoring means for monitoring a usage frequency of each of the application programs when execution of the application programs is instructed by the operational means; and
a usage frequency score management means for managing a usage monitoring result of each of the application programs, the usage monitoring result being obtained by the usage monitoring means, as a usage frequency score representing a usage frequency; wherein
the evaluation order decision means decides an evaluation order based on the usage frequency score of each of the plurality of application programs as the degree of reliability.

5. The information-processing device according to Claims 1 to 4, wherein the evaluation order decision means decides an evaluation order based on one or all of the security score, the stability score, and the usage frequency score of each of the plurality of application programs, and a combination of any of the security score, the stability score, and the usage frequency score, as the degree of reliability.

6. The information-processing device according to any preceding Claim, wherein the execution management means includes a start determination means for determining whether to permit a start of an application program that is currently unexecuted based on the evaluation order, and manages a start of each of the application programs based on a determination result of the start determination means.

7. The information-processing device according to any preceding Claim, wherein the execution management means includes a shutdown determination means for determining whether to shut down an application program that is in execution based on the evaluation order, the application program being one of the plurality of application programs, and manages shutdown of each of the application programs based on a determination result of the shutdown determination means.

8. The information-processing device according to any preceding Claim, further comprising:
an access frequency decision means for deciding an access frequency of each of the application programs based on the evaluation order; and
an access frequency management means for managing the access frequency based on the access frequency of each of the application programs; wherein
the execution management means manages execution of the application programs at an access frequency that is managed by the access frequency management means.

9. An information-processing method comprising the steps of:
executing a plurality of application programs;
deciding an evaluation order based on a degree of reliability of each of the plurality of application programs; and
managing execution of each of the application programs in processing in the step of executing the plurality of application programs, based on the evaluation order decided by processing of the step of deciding an evaluation order.

10. A program for enabling a computer to execute processing, the processing comprising the steps of:
executing a plurality of application programs;
deciding an evaluation order based on a degree of reliability of each of the plurality of application programs; and
managing execution of each of the application programs in processing in the step of executing the plurality of application programs, based on the evaluation order decided by processing of the step of deciding an evaluation order.

11. An information-processing device, comprising:
an execution unit configured to execute a plurality of application programs;
an evaluation order decision unit configured to decide an evaluation order based on a degree of reliability of each of the plurality of application programs; and
an execution management unit configured to manage execution, by the execution unit, of each of the application programs based on the evaluation order that is decided by the evaluation order decision unit.
